# EUROPÄISCHE PATENTSCHRIFT

(11) **EP 0 983 155 B1**
(45) Veröffentlichungstag und Bekanntmachung des Hinweises auf die Patenterteilung: **06.11.2002**
(21) Anmeldenummer: 98932056.9
(22) Anmeldetag: 05.05.1998
(51) Int. Cl.: B60G 17/052

(54) **LUFTFEDERSYSTEM**
PNEUMATIC SPRING SYSTEM
SYSTEME PNEUMATIQUE

(30) Priorität: 28.05.1997 DE 19722381
(43) Veröffentlichungstag der Anmeldung: 08.03.2000
(73) Patentinhaber: PHOENIX AKTIENGESELLSCHAFT, 21079 Hamburg (DE)
(72) Erfinder: SONNAK, Ulrich, D-21075 Hamburg (DE)
(86) Internationale Anmeldenummer: DE9801234
(87) Internationale Veröffentlichungsnummer: WO98054016

(56) Entgegenhaltungen:
- EP-A- 0 178 245
- DE-A- 4 438 192
- US-A- 4 671 323
- US-A- 5 328 005

## Beschreibung

Die Erfindung betrifft ein Luftfedersystem, umfassend wenigstens eine Luftfeder, bestehend mindestens aus einem Luftfederdeckel als oberes Bauteil; einem Luftfederkolben als unteres Bauteil sowie einem Luftfederbalg aus elastomerem Werkstoff, der die beiden gegenüberliegenden Bauteile unter Verwendung von Befestigungsmitteln miteinander verbindet, wobei der Balg unter Bildung eines volumenelastischen Luftfederinnenraumes an der Außenwand des Kolbens, und zwar innerhalb seines Abrollbereiches, abrollen kann; wenigstens ein Schaltventil, das insbesondere als Magnetventil ausgebildet ist; sowie einen Kompressor mit integrierter Restdruckhaltefunktion.

Zur besseren Montage im Fahrzeug oder zum Schutz der Luftfeder vor drucklosem Betrieb werden besonders im PKW pneumatische Ventile eingesetzt. Die Funktion dieser Ventile ist es, bei Unterschreitung eines definierten Luftfederdruckes zu schließen (Restdruckhalteventil). Mit diesem Ventiltyp können die oben genannten Fälle abgedeckt werden.

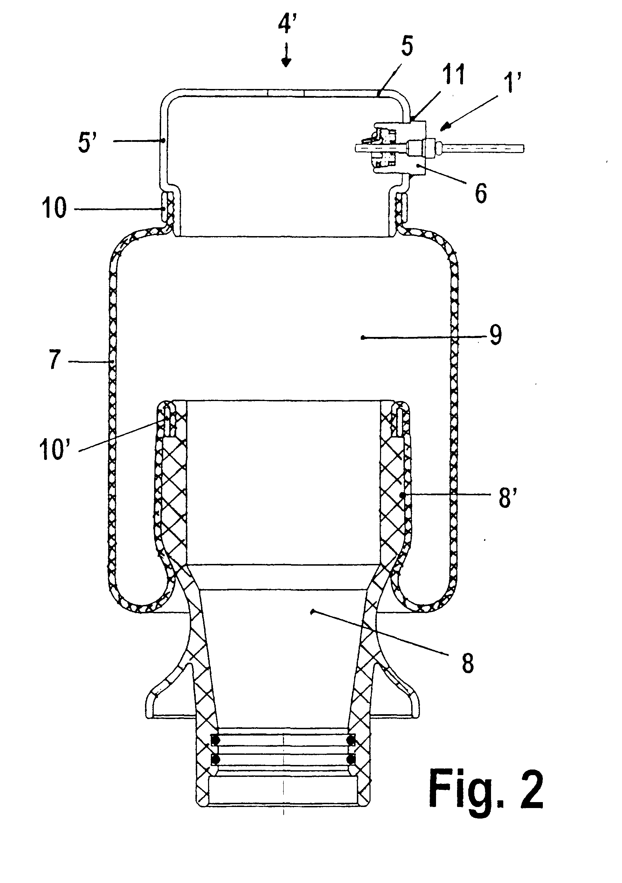

In der Druckschrift US-A-4 671 323 wird ein Luftfedersystem vorgestellt, das mit einem entsperrbaren Rückschlagventil versehen ist, wobei hinsichtlich konstruktiver Details und des Funktionsprinzipes des Ventiles insbesondere auf die Fig. 2 bis 6 verwiesen wird.

In Luftfedersystemen für PKW werden jedoch auch Kompressoren eingesetzt, die ihrerseits eine Restdruckhaltefunktion besitzen.

Durch die Kombination des erfindungsgemäßen entsperrbaren Rückschlagventiles gemäß Kennzeichen des Patentanspruches 1 mit dem im Kompressor eingebauten Restdruckhalteventil können nun auch die oben genannten Fälle erfüllt werden. Eine Vorbefüllung der Luftfeder (z.B. zu Montagezwecken) wird durch die Rückschlagfunktion erreicht.

Vorteil des erfindungsgemäßen Rückschlagventiles gegenüber einem Restdruckventil ist der einfachere und kostengünstigere Aufbau, die verbesserte Dichtigkeit sowie die weitgehende Unabhängigkeit der Funktion von Temperatur, Alter etc..

Zweckmäßige Ausführungsformen des erfindungsgemäßen Rückschlagventiles sind in den Patentansprüchen 2 bis 12 genannt.

Die Erfindung wird nun anhand von Ausführungsbeispielen unter Bezugnahme auf schematische Zeichnungen erläutert. Es zeigen:
- Fig. 1: einen Schaltplan eines Luftfedersystems;
- Fig. 2: ein entsperrbares Rückschlagventil, dessen Gehäuse im Luftfederdeckel eingeschweißt ist;
- Fig. 3: ein entsperrbares Rückschlagventil, dessen Gehäuse in einer Öffnung des Luftfederkolbens eingeschraubt ist;
- Fig. 4: ein entsperrbares Rückschlagventil, dessen Gehäuse mit dem Luftfederkolben einen einstückigen Verbund bildet;
- Fig. 5: eine bevorzugte Ausführungsform eines entsperrbaren Rückschlagventiles;
- Fig. 6a: ein entsperrbares Rückschlagventil gemäß Fig. 5 im Lagerungszustand;
- Fig. 6b: ein entsperrbares Rückschlagventil gemäß Fig. 5 im Montage- bzw. Demontagezustand; sowie
- Fig. 6c: ein entsperrbares Rückschlagventil gemäß Fig. 5 im Betriebszustand.

In Verbindung mit diesen Figuren gilt folgende Bezugsziffernliste:
- 1: entsperrbares Rückschlagventil
- 1': entsperrbares Rückschlagventil
- 1": entsperrbares Rückschlagventil
- 1"': entsperrbares Rückschlagventil
- 1"": entsperrbares Rückschlagventil
- 2: Schaltventil (Magnetventil)
- 3: Kompressor mit integrierter Restdruckhaltefunktion
- 4: Luftfeder
- 4': Luftfeder
- 4": Luftfeder
- 4"': Luftfeder
- 5: Luftfederdeckel
- 5': Seitenbereich des Luftfederdeckels
- 6: Ventilgehäuse
- 7: Luftfederbalg
- 8: Luftfederkolben
- 8': Abrollbereich des Luftfederkolbens
- 9: Luftfederinnenraum
- 10: Befestigungsmittel
- 10': Befestigungsmittel
- 11: Schweißstelle
- 12: Luftfederdeckel
- 13: Luftfederkolben
- 13': Abrollbereich des Luftfederkolbens
- 13": unterer Seitenbereich des Luftfederkolbens
- 14: Luftfederkolben
- 14': Abrollbereich des Luftfederkolbens
- 14": unterer Seitenbereich des Luftfederkolbens
- 15: Ventilgehäuse
- 16: Ventilgehäuse
- 17: Anschlußplatte
- 18: Ventilplatte aus elastomerem Werkstoff
- 19: Ventilbohrung für die Aufnahme eines Schlauchanschlußfittings
- 20: Ventilbohrung für die Aufnahme eines Schlauches
- 21: Ventilsitz
- 22: Dichtring aus elastomerem Werkstoff
- 22': Dichtring aus elastomerem Werkstoff
- 23: Schlauch aus Kunststoff
- 24: wulstförmiger Anschlag
- 25: Schlauchanschlußfitting

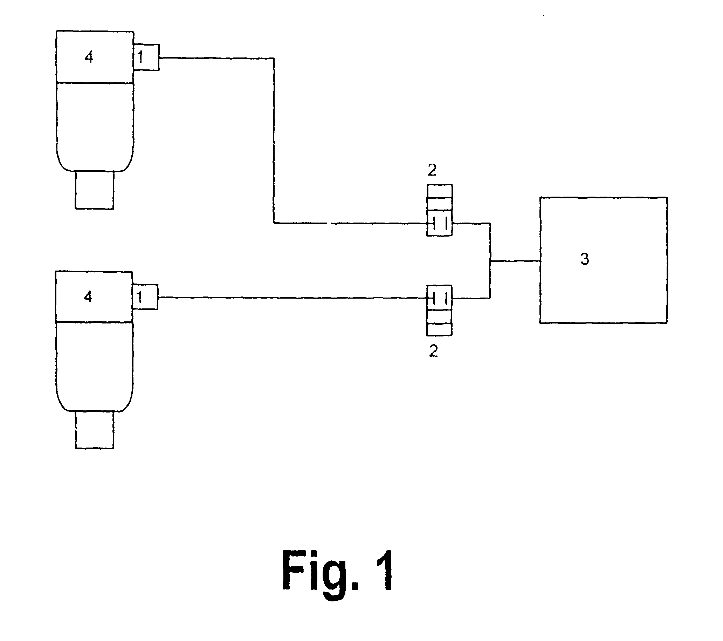

Nach dem Schaltplan gemäß Fig. 1 ist der Kompressor (3) mit integrierter Restdruckhaltefunktion mit zwei Luftfedern (4) verbunden, und zwar unter Verwendung von jeweils einem zwischengeschalteten Magnetventil (2). Im Bereich des Luftfederdeckels ist nun jede Luftfeder (4) mit einem entsperrbaren Rückschlagventil (1) ausgestattet.

Nach Fig. 2 besteht die Luftfeder (4') aus einem Luftfederdeckel (5) als oberes Bauteil, einem Luftfederkolben (8) als unteres Bauteil sowie einem Luftfederbalg (7) aus elastomerem Werkstoff, der die beiden gegenüberliegenden Bauteile unter Verwendung von Befestigungsmitteln (10, 10') in Form von Spannringen miteinander verbindet, wobei der Balg (7) unter Bildung eines volumenelastischen Luftfederinnenraumes (9) an der Außenwand des Kolbens (8), und zwar innerhalb seines Abrollbereiches (8'), abrollen kann.

Das entsperrbare Rückschlagventil (1') ist in einem Ventilgehäuse (6) untergebracht. Dabei weist der Luftfederdeckel (5) einen vergrößerten Seitenbereich (5') auf, der mit einer Öffnung versehen ist, in der das Ventilgehäuse (6) einsitzt, wobei das Gehäuse mit dem Luftfederdeckel (5) verschweißt ist (Schweißstelle 11).

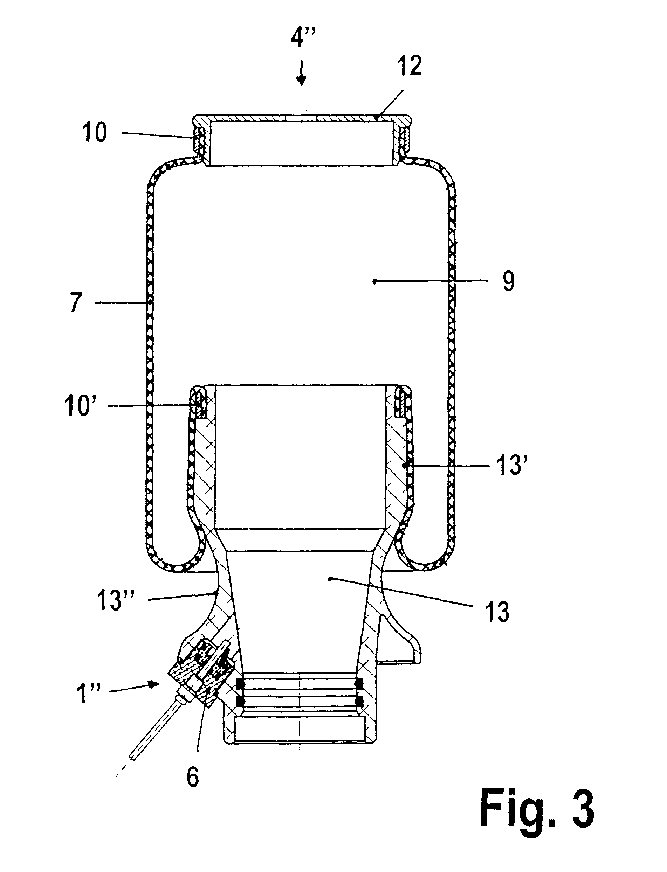

Fig. 3 zeigt eine Luftfeder (4"), die mit einer einfachen Ausführung eines Luftfederdeckels (12) ausgestattet ist, an der lediglich der Luftfederbalg (7) mittels des Befestigungsmittels (10) verankert ist. Das andere Ende des Balges (7) ist mit dem Luftfederkolben (13) verbunden, und zwar mittels des Befestigungsmittels (10'), wobei der Balg (7) innerhalb des Abrollbereiches (13') des Kolbens (13) abrollen kann.

Das entsperrbare Rückschlagventil (1") ist auch hier in einem Gehäuse (6) untergebracht. Der Luftfederkolben (13) ist bei dieser Ausführungsform jedoch innerhalb seines unteren Seitenbereiches (13') mit einer Öffnung versehen, in der nun das Ventilgehäuse (6) einsitzt. Das Gehäuse (6) ist dabei eingeschraubt.

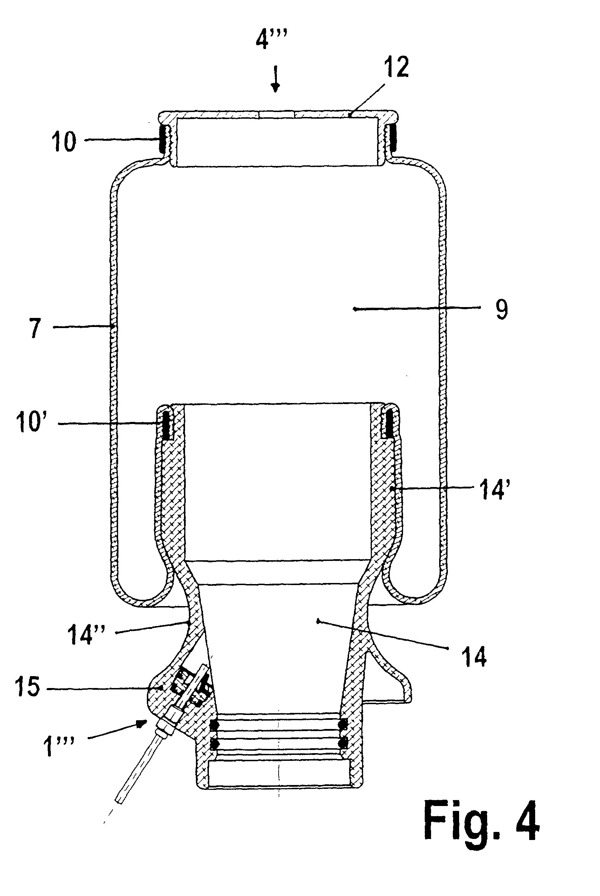

Nach Fig. 4 bildet das Ventilgehäuse (15) des entsperrbaren Rückschlagventiles (1'") einen einstückigen Verbund mit dem Luftfederkolben (14), und zwar innerhalb des unteren Seitenbereiches (14") des Kolbens. Ansonsten weist die Luftfeder (4"') die gleiche Konstruktion auf wie die Luftfeder (4") gemäß Fig. 3.

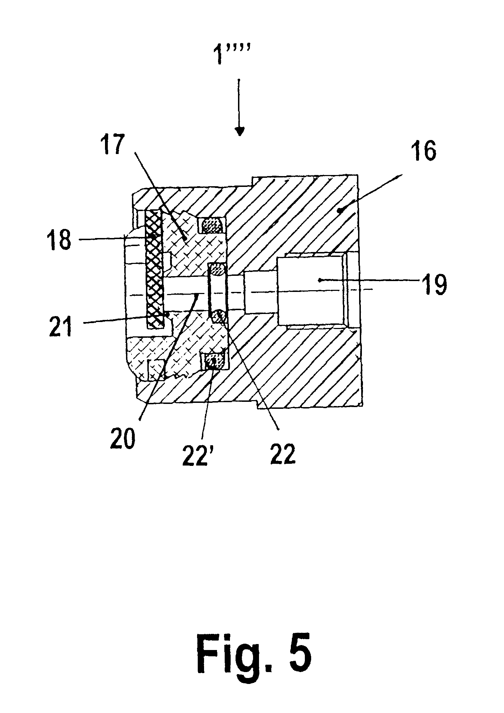

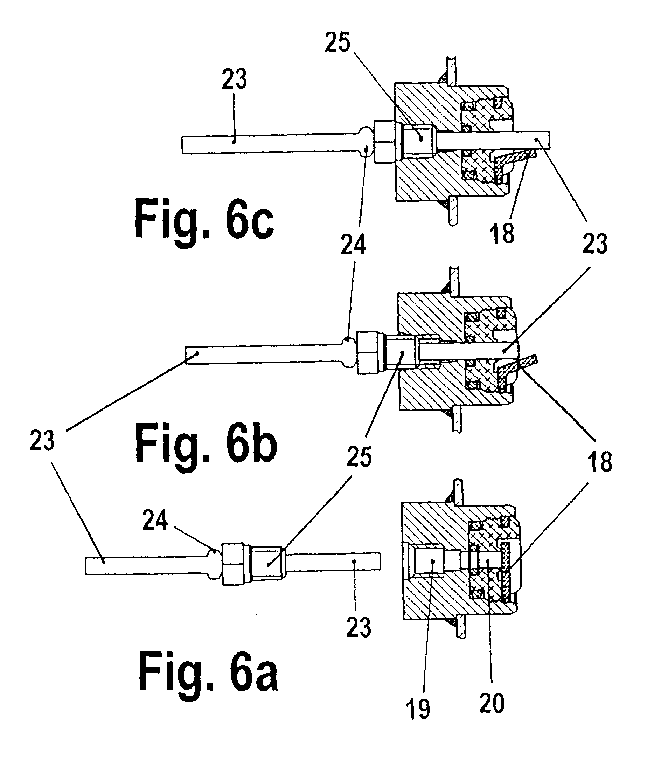

Fig. 5 zeigt nun konstruktive Details eines entsperrbaren Rückschlagventiles (1""). Danach ist das Ventilgehäuse (16), vorzugsweise aus Metall, mit einer Ventilbohrung (19) für die Aufnahme eines Schlauches (23) mit Schlauchanschlußfitting (25) versehen (Fig. 6a, 6b, 6c). Ferner befindet sich innerhalb einer Gehäusebohrung eine Anschlußplatte (17), die ebenfalls mit einer Ventilbohrung (20) für die Aufnahme des Schlauches (23) versehen ist. Die Anschlußplatte (17) besteht vorteilhafterweise aus Kunststoff. Die beiden Ventilbohrungen (19, 20) gehen dabei unter Bildung einer durchgehenden Bohrung ineinander über. Die Anschlußplatte (17) ist ferner mit einem Ventilsitz (21) für die Ventilplatte (18) aus elatomerem Werkstoff ausgestattet. Zwei Dichtringe (22, 22') aus ebenfalls elastomerem Werkstoff, die sich zwischen der Anschlußplatte (17) und dem Ventilgehäuse (16) einerseits und zwischen der Anschlußplatte (17) und dem Schlauch (23) andererseits befinden, dichten das Rückschlagventil (1"") nach außen bzw. gegen den Schlauch (23) ab.

Fig. 6a zeigt einen Schlauch (23) aus widerstandsfähigem Kunststoff, insbesondere aus Polyamid, der mit einem wulstförmigen Anschlag (24) versehen ist, der wiederum mit dem Schlauch einen einstückigen Verbund bildet. Außerdem ist der Schlauch (23) mit einem Schlauchanschlußfitting (25) ausgestattet, der an dem Anschlag (24) anliegt. In diesem Lagerungszustand verschließt die Ventilplatte (18) die Ventilbohrungen (19, 20), und zwar zum Luftfederinneren hin.

Bei der Montage des Schlauches (23) gemäß Fig. 6b dringt nun der Schlauch mit dem Schlauchanschlußfitting (25) in die Ventilbohrungen (19, 20; Fig. 6a) ein, wobei die Ventilplatte (18) durch den Schlauch (23) aus widerstandsfähigen Kunststoff zur Seite gedrückt wird, was dazu führt, daß die Ventilbohrungen entsperrt sind. Dabei ist die Abdichtung durch den Dichtring (22) gewährleistet.

Im Betriebszustand gemäß Fig. 6c ist nun die Ventilplatte (18) durch den Schlauch (23) vollständig zur Seite gedrückt, was dazu führt, daß die Ventilbohrungen (19, 20; Fig. 6a) entsperrt sind. Der Anschlag (24) sorgt für eine Wegbegrenzung des Schlauches (23). Damit wird verhindert, daß der Schlauch zu weit in Richtung Luftfederinnenraum (9; Fig. 2, 3, 4) vordringt.

Bei einer Demontage gemäß Fig. 6b wird durch dieses Konstruktionsprinzip ferner dafür gesorgt, daß keine vollständige Entlüftung der Luftfeder erfolgt, da bei der Entfernung des Schlauches (23) die Ventilplatte (18) die Ventilbohrungen (19, 20; Fig. 6a) verschließt.

## Patentansprüche

1. Luftfedersystem, umfassend
- wenigstens eine Luftfeder (4, 4', 4", 4"'), bestehend mindestens aus
- einem Luftfederdeckel (5, 12) als oberes Bauteil;
- einem Luftfederkolben (8, 13, 14) als unteres Bauteil sowie
- einem Luftfederbalg (7) aus elastomerem Werkstoff, der die beiden gegenüberliegenden Bauteile unter Verwendung von Befestigungsmitteln (10, 10') miteinander verbindet, wobei der Balg (7) unter Bildung eines volumenelastischen Luftfederinnenraumes (9) an der Außenwand des Kolbens (8, 13, 14), und zwar innerhalb seines Abrollbereiches (8', 13', 14'), abrollen kann;
- wenigstens ein Schaltventil (2), das insbesondere als Magnetventil ausgebildet ist; sowie
- einen Kompressor (3) mit integrierter Restdruckhaltefunktion;
**dadurch gekennzeichnet, daß**
- die Luftfeder (4, 4', 4", 4'") mit einem entsperrbaren Rückschlagventil (1, 1', 1", 1"', 1"") versehen ist, wobei das Rückschlagventil folgende Bauteile umfaßt, nämlich:
- ein Ventilgehäuse (6, 15, 16) aus Metall oder Kunststoff, das mit einer Ventilbohrung (19) für die Aufnahme eines Schlauches (23) mit Schlauchanschlußfitting (25) versehen ist;
- eine Anschlußplatte (17), die in einer Gehäusebohrung einsitzt und die mit einer Ventilbohrung (20) für die Aufnahme eines Schlauches (23) sowie mit einem Ventilsitz (21) für eine zum Luftfederinneren hin angeordnete Ventilplatte (18) aus elastomerem Werkstoff versehen ist, wobei die Ventilplatte durch den Schlauch (23) zur Seite gedrückt wird und somit die beiden Ventilbohrungen (19, 20), die unter Bildung einer durchgehenden Bohrung ineinanderübergehen, entsperrt; sowie
- zwei Dichtringe (22, 22'), die sich zwischen der Anschlußplatte (17) und dem Ventilgehäuse (6, 15, 16) einerseits und zwischen der Anschlußplatte (17) und dem Schlauch (23) andererseits befinden.

2. Luftfedersystem nach Anspruch 1, **dadurch gekennzeichnet, daß** sich das Rückschlagventil (1, 1', 1"") im Luftfederdeckel (5) befindet.

3. Luftfedersystem nach Anspruch 1, **dadurch gekennzeichnet, daß** sich das Rückschlagventil (1", 1"', 1"") im Luftfederkolben (13, 14) befindet.

4. Luftfedersystem nach Anspruch 2, **dadurch gekennzeichnet, daß** der Luftfederdeckel (5) einen vergrößerten Seitenbereich (5') aufweist, der mit einer Öffnung versehen ist, in der das Ventilgehäuse (6, 16) einsitzt, wobei das Gehäuse vorzugsweise mit dem Luftfederdeckel verschweißt ist (Schweißstelle 11).

5. Luftfedersystem nach Anspruch 3, **dadurch gekennzeichnet, daß** der Luftfederkolben (13) innerhalb seines unteren Seitenbereiches (13") mit einer Öffnung versehen ist, in der das Ventilgehäuse (6, 16) einsitzt, vorzugsweise unter Verschraubung.

6. Luftfedersystem nach Anspruch 3, **dadurch gekennzeichnet, daß** das Ventilgehäuse (15) einen einstückigen Verbund mit dem Luftfederkolben (14) bildet, und zwar innerhalb des unteren Seitenbereiches (14") des Kolbens.

7. Luftfedersystem nach einem der Ansprüche 1 bis 6, **dadurch gekennzeichnet, daß** das Ventilgehäuse (6, 15, 16) aus Metall und die Anschlußplatte (17) aus Kunststoff besteht.

8. Luftfedersystem nach einem der Ansprüche 1 bis 7, **dadurch gekennzeichnet, daß** der Schlauch (23) aus widerstandsfähigem Kunststoff, vorzugsweise aus Polyamid, besteht.

9. Luftfedersystem nach einem der Ansprüche 1 bis 8, **dadurch gekennzeichnet, daß** der Schlauch (23) zwecks Wegbegrenzung mit einem Anschlag (24) versehen ist.

10. Luftfedersystem nach Anspruch 9, **dadurch gekennzeichnet, daß** der Anschlag (24) einen einstückigen Verbund mit dem Schlauch bildet.

11. Luftfedersystem nach Anspruch 9 oder 10, **dadurch gekennzeichnet, daß** der Anschlag (24) in Form eines Wulstes ausgebildet ist.

12. Luftfedersystem nach einem der Ansprüche 1 bis 11, **dadurch gekennzeichnet, daß** der Schlauchanschlußfitting (25) an dem Anschlag (24) anliegt.

## Claims

1. Air spring system, comprising
- at least one air spring (4, 4', 4", 4"'), consisting at least of
- an air spring cover (5, 12) as upper component;
- an air spring piston (8, 13, 14) as lower component and
- an air spring bellows (7) which is made of elastomer material and connects the two opposing components together using fastening means (10, 10'), the bellows (7) being able to roll on the external wall of the piston (8, 13, 14), inside its rolling area (8', 13', 14'), forming an air spring internal chamber (9) of elastic volume;
- at least one switching valve (2) which is embodied in particular as a solenoid valve, and
- a compressor (3) with an integral residual pressure holding function;
**characterised in that**
- the air spring (4, 4', 4", 4"') is provided with a non-return valve (1, 1', 1", 1"') which can be unblocked, the non-return valve comprising the following components, namely:
- a valve housing (6, 15, 16) which is made of metal or plastic and is provided with a valve bore (19) for receiving a hose (23) with a hose connecting fitting (25);
- a connecting plate (17) which sits in a housing bore and is provided with a valve bore and is provided with a valve bore (20) for receiving a hose (23) and with a valve seat (21) for a valve plate (18) which is arranged facing the interior of the air spring and made of elastomer material, the valve plate being pressed to the side by the hose (23) and thus unblocking the two valve bores (19, 20) which run into one another forming a continuous bore, and
- two sealing rings (22, 22') which are located between the connecting plate (17) and the valve housing (6, 15, 16) on one side and between the connecting plate (17) and the hose (23) on the other side.

2. Air spring system according to claim 1,
**characterised in that** the non-return valve (1, 1', 1"") is located in the air spring cover (5).

3. Air spring system according to claim 1,
**characterised in that** the non-return valve (1", 1"', 1"") is located in the air spring piston (13, 14).

4. Air spring system according to claim 2,
**characterised in that** the air spring cover (5) exhibits an enlarged side area (5') which is provided with an opening in which the valve housing (6, 16) sits, the housing preferably being welded to the air spring cover (weld 11).

5. Air spring system according to claim 3,
**characterised in that** inside its lower side area (13") the air spring piston (13) is provided with an opening in which the valve housing (6, 16) sits, preferably screwed in place.

6. Air spring system according to claim 3,
**characterised in that** the valve housing (15) forms a one-piece assembly with the air spring piston (14), inside the lower side area (14") of the piston.

7. Air spring system according to one of claims 1 to 6,
**characterised in that** the valve housing (6, 15, 16) is made of metal and the connecting plate (17) is made of plastic.

8. Air spring system according to one of claims 1 to 7,
**characterised in that** the hose (23) is made of resistant plastic, preferably of polyamide.

9. Air spring system according to one of claims 1 to 8,
**characterised in that** the hose (23) is provided with a stop (24) to limit travel.

10. Air spring system according to claim 9,
**characterised in that** the stop (24) forms a one-piece assembly with the hose.

11. Air spring system according to claim 9 or 10,
**characterised in that** the stop (24) is embodied in the form of a bead.

12. Air spring system according to one of claims 1 to 11, **characterised in that** the hose connecting fitting (25) bears on the stop (24).

## Revendications

1. Système à ressort pneumatique, comprenant
- au moins un ressort pneumatique (4, 4', 4", 4"'), composé au moins d'
- un couvercle à ressort pneumatique (5, 12) à titre de composant supérieur ;
- un piston de ressort pneumatique (8, 13, 14) à titre de composant inférieur, ainsi que
- un soufflet de ressort pneumatique (7) en matériau élastomère, qui relie ensemble les deux composants opposés, en utilisant des moyens de fixation (10, 10'), le soufflet (7) pouvant se dérouler sur la paroi extérieure du piston (8, 13, 14) et précisément à l'intérieur de sa zone de déroulement (8', 13', 14'), en formant un espace intérieur de ressort pneumatique (9) ayant une élasticité volumique ;
- au moins une soupape de commutation (2), réalisée en particulier sous la forme de soupape magnétique ou électrovanne ; et
- un compresseur (3) à fonction de maintien de pression résiduelle intégrée ;
**caractérisé en ce que**
- le ressort pneumatique (4, 4', 4", 4"') est muni d'un clapet anti-retour (1, 1', 1", 1"', 1"") verrouillable, le clapet anti-retour comprenant les éléments suivants, précisément :
- un boîtier de clapet (6, 15, 16) en métal ou en matière synthétique, munie d'un perçage de clapet (19) pour loger un tuyau (23) ayant un raccord de raccordement de tuyau (25) ;
- une plaque de raccordement (17), s'insérant dans un perçage de boîtier et qui est munie d'un perçage de clapet (20) pour recevoir un tuyau (23) ainsi que d'un siège de clapet (21) pour une plaque de clapet (18), disposée en direction de l'intérieur du ressort pneumatique et formée en matériau élastomère, la plaque de clapet étant pressée vers le côté par le tuyau (23) et déverrouillant ainsi les deux perçages de clapet (19, 20) qui se transforment l'un en l'autre en formant un perçage continu ; et
- deux bagues d'étanchéité (22, 22'), qui se trouvent entre la plaque de raccordement (17) et le boîtier de clapet (6, 15, 16), d'une part, et entre la plaque de raccordement (17) et le tuyau (23), d'autre part.

2. Système à ressort pneumatique selon la revendication 1, **caractérisé en ce que** le clapet anti-retour (1, 1', 1"") se trouve dans le couvercle de ressort pneumatique (5).

3. Système à ressort pneumatique selon la revendication 1, **caractérisé en ce que** le clapet anti-retour (1", 1"', 1"") se trouve dans le piston de ressort pneumatique (13, 14).

4. Système à ressort pneumatique selon la revendication 2, **caractérisé en ce que** le couvercle de ressort pneumatique (5) présente une zone latérale (5') agrandie, munie d'une ouverture dans laquelle s'insère le boîtier de clapet (6, 16), le boîtier étant de préférence soudé au couvercle de ressort pneumatique (point de soudage 11).

5. Système à ressort pneumatique selon la revendication 3, **caractérisé en ce que** le piston à ressort pneumatique (13) est muni, à l'intérieur de sa zone latérale inférieure (13'), d'une ouverture dans laquelle le boîtier de clapet (6, 16) s'insère, de préférence avec vissage.

6. Système à ressort pneumatique selon la revendication 3, **caractérisé en ce que** le boîtier de clapet (15) forme un composite monolithique avec le piston de ressort pneumatique (13) et, précisément, à l'intérieur de la zone latérale inférieur (14") du piston.

7. Système à ressort pneumatique selon l'une des revendications 1 à 6, **caractérisé en ce que** le boîtier de clapet (6, 15, 16) est en métal, et la plaque de raccordement (17) est en matière synthétique.

8. Système à ressort pneumatique selon l'une des revendications 1 à 7, **caractérisé en ce que** le tuyau (23), étant d'une matière synthétique, offre une résistance, de préférence en polyamide.

9. Système à ressort pneumatique selon l'une des revendications 1 à 8, **caractérisé en ce que** le tuyau (23) est muni d'une butée (24), dans le but de limiter la course de déplacement.

10. Système à ressort pneumatique selon la revendication 9, **caractérisé en ce que** la butée (24) forme un composite monolithique avec le tuyau.

11. Système à ressort pneumatique selon la revendication 9 ou 10, **caractérisé en ce que** la butée (24) est réalisée sous la forme d'un bourrelet.

12. Système à ressort pneumatique selon l'une des revendications 1 à 11, **caractérisé en ce que** le raccord de raccordement de tuyau (25) est en appui sur la butée (24).
